# EUROPÄISCHE PATENTSCHRIFT

(11) **EP 2 040 458 B1**
(45) Veröffentlichungstag und Bekanntmachung des Hinweises auf die Patenterteilung: **07.11.2018**
(21) Anmeldenummer: 08016805.7
(22) Anmeldetag: 24.09.2008
(51) Int. Cl.: H04N 5/355, H04N 5/3745, H04N 5/378

(54) **Bildsensor**
Image sensor
Capteur d'images

(30) Priorität: 24.09.2007 DE 102007045448
(43) Veröffentlichungstag der Anmeldung: 25.03.2009
(73) Patentinhaber: Arnold & Richter Cine Technik GmbH & Co. Betriebs KG, 80799 München (DE)
(72) Erfinder: Cieslinski, Michael, 82008 Unterhaching (DE)
(74) Vertreter: Manitz Finsterwald Patentanwälte PartmbB

(56) Entgegenhaltungen:
- WO-A2-00/78034
- JP-A- 2001 177 775
- US-A1- 2005 083 421
- US-A1- 2006 157 759
- US-A1- 2007 096 238

## Beschreibung

Die vorliegende Erfindung betrifft einen Bildsensor, insbesondere CMOS-Bildsensor, für elektronische Kameras. Der Bildsensor umfasst eine Vielzahl von in Zeilen und Spalten angeordneten Pixeln. Die Pixel umfassen jeweils ein lichtempfindliches Detektorelement, um aus einfallendem Licht elektrische Ladung zu erzeugen, ein Transfer-Gate, einen Ausleseknoten, der über das Transfer-Gate mit dem Detektorelement ladungsgekoppelt ist, eine Wandlerschaltung, um ein Messsignal zu erzeugen, das einer in dem Ausleseknoten vorhandenen Ladung proportional ist, und eine Rücksetzeinrichtung, um eine in dem Ausleseknoten vorhandene Ladung auf einen Referenzwert rückzusetzen. Der Bildsensor umfasst ferner eine Steuereinrichtung zum Steuern des Transfer-Gates und der Rücksetzeinrichtung des jeweiligen Pixels. Die vorliegende Erfindung betrifft weiterhin ein Verfahren zum Auslesen eines Bildsensors, insbesondere eines CMOS-Bildsensors, für elektronische Kameras.

Eine elektronische Kamera wird beispielsweise dazu verwendet, um Bildsequenzen digital aufzuzeichnen, die später in einem Kino vorgeführt werden. Dabei ist es vorteilhaft, wenn eine derartige Kamera eine hohe Lichtempfindlichkeit und zugleich einen hohen Dynamikumfang aufweist. Diese beiden Eigenschaften sind wesentlich für die Qualität der Aufzeichnung, und sie helfen beispielsweise, die Kosten für die Beleuchtung der Szene zu reduzieren.

Der Bildsensor einer derartigen Kamera wandelt dabei durch das Objektiv der Kamera fallendes Licht in elektrische Signale um. Der Bildsensor umfasst hierfür eine Vielzahl von lichtempfindlichen Elementen, die sog. Pixel. In den Pixeln wird das einfallende Licht in elektrische Ladung gewandelt. Zum Auslesen eines von der Kamera aufgenommenen Bildes werden die Pixel beispielsweise der Reihe nach adressiert und eine zu der Ladung des jeweiligen Pixels proportionale Spannung erzeugt, die zu einem Ausgang des Bildsensors geleitet wird.

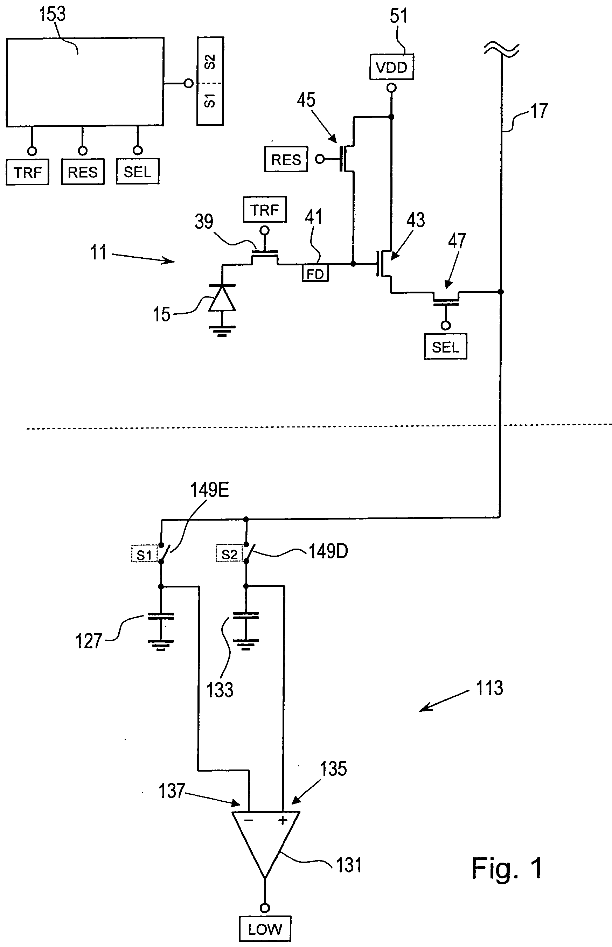

Ein Bildsensor der eingangs genannten Art kann beispielsweise wie in Fig. 1 dargestellt aufgebaut sein, in der stellvertretend lediglich ein einziges Pixel 11 dargestellt ist. Das dargestellte Pixel 11 umfasst ein lichtempfindliches Detektorelement in Form einer sog. Pinned-Diode (PD) 15, die über ein Transfer-Gate 39 mit einem Ausleseknoten 41, der als eine sog. Floating Diffusion (FD) ausgebildet ist, ladungsgekoppelt ist. Der Ausleseknoten 41 ist mit dem Gate eines als Source-Follower ausgebildeten Wandler-Feldeffekttransistors (FET) 43, der eine Ladungs-Spannungs-Wandlerschaltung darstellt, verbunden. Darüber hinaus ist der Ausleseknoten 41 über einen Rücksetz-FET 45 mit einer positiven Spannungsversorgung 51 verbunden. Einer der beiden Kanalanschlüsse des Wandler-FETs 43 ist ebenfalls mit der positiven Versorgung 51 verbunden, wohingegen der andere der beiden Kanalanschlüsse des Wandler-FETs 43 über einen Auswahl-FET 47, der als Zeilenauswahlschalter fungiert, mit der dem dargestellten Pixel zugeordneten Spaltenleitung 17 verbindbar ist.

Die Spaltenleitung 17 ist dafür vorgesehen, die in der zugehörigen Spalte angeordneten Pixel, insbesondere Pixel 11, mit einer gemeinsamen Spaltenverstärkerschaltung 113 zu verbinden. Die Spaltenverstärkerschaltung 113 umfasst einen ersten Kondensator 127, der mit einem Anschluss gegen Masse geschaltet und mit dem anderen Anschluss über einen Schalter 149E wahlweise mit der Spaltenleitung 17 verbindbar ist. Die Spaltenverstärkerschaltung 113 umfasst ferner einen zweiten Kondensator 133, der mit einem Anschluss ebenfalls gegen Masse geschaltet und mit dem anderen Anschluss über einen weiteren Schalter 149D ebenfalls wahlweise mit der Spaltenleitung 17 verbindbar ist. Darüber hinaus umfasst die Spaltenverstärkerschaltung 113 einen Verstärker 131, an dessen negativem Eingang 137 die an dem ersten Kondensator 127 anliegende Spannung und an dessen positivem Eingang 135 die an dem zweiten Kondensator 133 anliegende Spannung eingegeben wird.

Das Transfer-Gate 39 ist über eine Steuerleitung TRF, der Rücksetz-FET 45 ist über eine Steuerleitung RES, der Auswahl-FET 47 ist über eine Steuerleitung SEL, der Schalter 149E ist über eine Steuerleitung S1 und der Schalter 149D ist über eine Steuerleitung S2 von einer gemeinsamen Steuereinrichtung 153 des Bildsensors steuerbar.

Nachfolgend wird die Funktionsweise eines derartigen Pixels 11 exemplarisch, basierend auf einer 3.3V-CMOS-Technologie, beschrieben.

Zunächst wird das während eines Belichtungsvorgangs einfallende Licht durch die Pinned-Diode 15 in elektrische Ladung umgewandelt, so dass sich die Pinned-Diode 15 mit Elektronen füllt. Während der Belichtung werden die Steuerleitungen TRF, RES und SEL jeweils auf 0V gehalten, d.h. die hierdurch angesteuerten Schalter 39, 45, 47 sind geöffnet.

Zum Auslesen wird in einem ersten Schritt (Reset 1) an die Steuerleitung RES kurz eine Spannung von 3.3V angelegt, um durch Leckströme und/oder Streulicht gebildete Ladung aus dem Ausleseknoten 41 zu entfernen.

In einem zweiten Schritt (Lesen des Referenzwerts) wird an die Steuerleitung SEL eine Spannung von 3.3V angelegt (Schließen des Schalters 47), und der Schalter 149E wird geschlossen. Hierdurch wird der Spannungspegel des Ausleseknotens 41 über den Wandler-FET 43 und den Auswahl-FET 47 auf die Spaltenleitung 17 geschaltet und somit zum Kondensator 127 geführt. Nachdem das System eingeschwungen ist, wird der Kondensator 127 durch Öffnen des Schalters 149E wieder von dem Pixel 11 getrennt.

Anschließend wird in einem dritten Schritt (Übertragen der Ladung) an die Steuerleitung TRF kurz eine Spannung von 3.3V angelegt, so dass die Elektronen von der Pinned-Diode 15 zu dem Ausleseknoten 41 fließen können.

Danach wird in einem vierten Schritt (Lesen des Signals) der Schalter 149D geschlossen. Hierdurch wird der Spannungspegel des Ausleseknotens 41 über den Wandler-FET 43 und den Auswahl-FET 47 auf die Spaltenleitung 17 geschaltet und somit zum Kondensator 133 geführt. Nachdem das System eingeschwungen ist, wird der Kondensator 133 durch Öffnen des Schalters 149D wieder von dem Pixel 11 getrennt und die Steuerleitung SEL wird wieder auf 0V gelegt.

Schließlich wird in einem fünften Schritt (Reset 2) an die Steuerleitungen RES und TRF kurz eine Spannung von 3.3V angelegt, um die Ladung aus dem Ausleseknoten 41 und eventuelle Restladungen aus der Pinned-Diode 15 zu entfernen, damit der nächste Belichtungsvorgang wieder mit einem völlig "leeren" Pixel beginnen kann.

Am Ausgang des Verstärkers 131 liegt nun eine Spannung an, die der durch den Belichtungsvorgang in der Pinned-Diode 15 erzeugten Ladungsmenge entspricht.

Um bei dem anhand von Fig. 1 beschriebenen Bildsensor eine hohe Lichtempfindlichkeit zu gewährleisten, ist es nötig, dass die durch das einfallende Licht in der Pinned-Diode 15 erzeugten Ladungen an dem Gate des Wandler-FET 43 eine hohe Spannung bewirken. Dies wird dadurch erreicht, dass die Kapazität des Ausleseknotens 41 klein gehalten wird. Bei einer Kapazität von beispielsweise 2fF bewirkt jedes Elektron eine Spannungsänderung von 80µV. Besitzt die Kamera einen Rauschpegel von z.B. 240µV, sind damit bereits 3 Elektronen bzw. 3 Photonen detektierbar.

Der anhand von Fig. 1 beschriebene Bildsensor besitzt damit zwar eine hohe Lichtempfindlichkeit, jedoch nur einen geringen Dynamikumfang. Bei der vorstehend genannten Kapazität von 2fF ist der Ausleseknoten 41 bereits mit 12000 Elektronen vollständig gefüllt. 12000 Elektronen bewirken eine Spannung von etwa 1V, wodurch die Grenze des elektrischen Bereichs erreicht ist, der an die Ausgänge weitergeleitet werden kann.

Dadurch ergibt sich eine maximal erreichbare Dynamik von 4000:1. Ein fotographischer Film hingegen besitzt eine Dynamik von über 10000: 1.

Zur Erhöhung des Dynamikumfangs ist es bekannt, wenigstens zwei Aufnahmen, die unterschiedliche Belichtungszeiten besitzen, zu kombinieren, wobei die Aufnahmen nacheinander aufgenommen werden. Dies ist bei bewegten Objekten aufgrund des zeitlichen Versatzes der zu kombinierenden Aufnahmen jedoch nicht möglich.

Aus dem Dokument JP 2001 177775 A sind ein Bildsensor und ein Ausleseverfahren bekannt, bei deen die während eines Belichtungsvorgangs erzeugte Ladung in mehreren Portionen von dem Detektorelement zu dem Ausleseknoten transferiert wird.

Dokument US 2005/0083421 A1 offenbart ein Steuerverfahren für einen Pixel-Schaltkreis, bei dem nacheinander unterschiedlich große Transfer-Steuersignale an ein Transfer-Gate angelegt werden.

Dokument WO 00/78034 A2 beschreibt ein Bildsensorelement mit zwei unterschiedlichen Empfindlichkeiten, wobei sowohl in einem Photogate als auch in einer Floating Diffusion Ladung akkumuliert wird.

Dokument US 2006/0157759 A1 offenbart einen Bildsensor, bei dem während des Belichtungsvorgangs ein erstes Transfer-Steuersignal und nach dem Belichtungsvorgang ein zweites, größeres Transfer-Steuersignal an ein Transfer-Gate angelegt werden.

Aus dem Dokument US 2007/0096238 A1 sind ein Bildsensor mit den Merkmalen des Oberbegriffs des Anspruchs 1 und ein Verfahren mit den Merkmalen des Oberbegriffs des Anspruchs 14 bekannt.

Der Erfindung liegt die Aufgabe zugrunde, eine Möglichkeit anzugeben, bei einem Bildsensor bzw. einem Verfahren der eingangs genannten Art neben einer hohen Lichtempfindlichkeit auch einen hohen Dynamikumfang zu gewährleisten.

Diese Aufgabe wird durch einen Bildsensor mit den Merkmalen des Anspruchs 1 gelöst.

Weiterhin wird diese Aufgabe durch ein Verfahren mit den Merkmalen des Anspruchs 14 gelöst.

Erfindungsgemäß ist es also möglich, die in dem Detektorelement aufgrund eines einzigen Belichtungsvorgangs erzeugte Ladung in mehreren Portionen auszulesen. Durch das schrittweise Auslesen kann die Dynamik des Bildsensors um einen Faktor, der der Anzahl der Ladungstransfers entspricht, gegenüber der aus dem Stand der Technik bekannten Dynamik erhöht werden. Wird die in dem Detektorelement erzeugte Ladung beispielsweise basierend auf drei Ladungstransfers ausgelesen, kann die Dynamik um den Faktor drei erhöht werden. Weist der Ausleseknoten beispielsweise eine Sättigungsgrenze von 12000 Elektronen und das Detektorelement eine Sättigungsgrenze von 36000 Elektronen auf, so wird bei einem Rauschpegel von drei Elektronen eine Dynamik von 12000:1 erreicht. Wenn das Detektorelement eine noch höhere Sättigungsgrenze besitzt, kann die Dynamik durch ein mehr als dreifach unterteiltes Auslesen noch weiter erhöht werden. Da hierbei die Kapazität des Ausleseknotens gering gewählt sein kann (im Verhältnis zu der Kapazität des Detektorelements), bleibt eine hohe Lichtempfindlichkeit erhalten.

Auf zuschaltbare Kapazitäten für die Pixel kann bei dem erfindungsgemäßen Bildsensor und dem erfindungsgemäßen Verfahren somit verzichtet werden. Derartige zuschaltbare Kapazitäten erhöhen zwar den Dynamikumfang, sie verringern jedoch die Lichtempfindlichkeit, da der von der jeweiligen Kapazität, einem jeweiligen zusätzlichen Transistor für die Kapazität und einer zusätzlichen Ansteuerleitung benötigte Platz nicht mehr für das jeweilige Detektorelement zur Verfügung steht. Außerdem sind bei derartigen zuschaltbaren Kapazitäten unerwünschte Kalibrierungen erforderlich.

Wichtig ist im Zusammenhang mit der Erfindung, dass diejenige Ladung in mehrere Teilladungen (bzw. Teilwert-Messsignale) aufgeteilt wird, die aufgrund eines einzigen Belichtungsvorgangs in dem jeweiligen Detektorelement erzeugt worden ist, wobei beispielsweise ein mechanischer oder ein elektronischer Shutter den Belichtungsvorgang initiiert oder beendet. Hierdurch eignet sich der Bildsensor insbesondere auch zum Aufzeichnen von bewegten Motiven. Das Ausgangssignal des Bildsensors wird nämlich nicht aus mehreren Teilwert-Messsignalen erzeugt, die unterschiedlichen Belichtungszeiten entsprechen, was zu einem "Verschmieren" der Bildinformation führen könnte.

Unter dem Begriff "Ladungskopplung" ist zu verstehen, dass eine in dem Detektorelement vorhandene Ladung in den Ausleseknoten verschiebbar ist. Bei der im Ausleseknoten vorhandenen Ladung kann es sich insbesondere um eine Null-Ladung handeln, d.h. nach dem Rücksetzen durch die Rücksetzeinrichtung ist dann keine Ladung mehr in dem Ausleseknoten vorhanden. Dies gilt insbesondere für den genannten Referenzwert.

Die Steuereinrichtung ist derart ausgelegt, dass zum Auslesen der während eines einzigen Belichtungsvorgangs in dem jeweiligen Detektorelement erzeugten Ladung wenigstens drei aufeinanderfolgende Transfer-Steuersignale an das Transfer-Gate angelegt werden, so dass ein jeweiliger Ladungstransfer von dem Detektorelement zu dem Ausleseknoten ermöglicht wird, um mittels der Wandlerschaltung für jeden Ladungstransfer ein eigenes Teilwert-Messsignal zu erzeugen, das der in dem Ausleseknoten aufgrund des jeweiligen Ladungstransfers vorhandenen Ladung proportional ist. Bevorzugt wird zwischen den jeweiligen aufeinanderfolgenden Transfer-Steuersignalen die Rücksetzeinrichtung aktiviert.

Wenigstens drei der Transfer-Steuersignale weisen unterschiedliche Steuerwerte auf, wobei der Absolutwert des Steuerwerts eines späteren der Transfer-Steuersignale größer ist als der Absolutwert des Steuerwerts eines früheren der Transfer-Steuersignale. Beispielsweise können bei einem CMOS-Bildsensor die wenigstens drei Transfer-Steuersignale unterschiedliche Steuerspannungswerte besitzen. Dies bedeutet insbesondere, dass nicht jeder der Steuerspannungswerte der der jeweiligen Technologie-Generation zugrundeliegenden vollen Betriebsspannung entsprechen muss. Hierdurch kann der Leistungsverbrauch des Bildsensors verringert werden. Vor allem wird durch ein Transfer-Steuersignal, dessen betragsmäßiger Steuerwert größer ist als der betragsmäßige Steuerwert eines anderen Transfer-Steuersignals, der Transfer von solchen Ladungen ermöglicht, die durch das andere (betragsmäßige geringere) Transfer-Steuersignal (noch) nicht transferierbar sind. Durch eine Abstaffelung der Steuerwerte der Transfer-Steuersignale können bei nicht gesättigtem Detektorelement auch Teilwert-Messsignale erzeugt werden, die einer Null-Ladung entsprechen.

Das Detektorelement kann genau zwei Anschlüsse umfassen, wobei der eine Anschluss mit einem vorbestimmten Bezugspotential (z.B. Masse) und der andere Anschluss lediglich mit dem Transfer-Gate gekoppelt ist, d.h. die in dem Detektorelement erzeugte Ladung kann (über das Transfer-Gate) ohne einen weiteren Schalter oder eine Vorspannung des Detektorelements direkt an den Ausleseknoten übertragen werden.

Insbesondere kann das Detektorelement als eine Photodiode ausgebildet sein, vorzugsweise als eine Pinned-Diode, deren Potential-Niveau fixiert ist.

Der Ausleseknoten kann als ein floatendes Diffusionsgebiet (floating diffusion) ausgebildet sein, dessen Potential-Niveau mit der in dem Ladungsknoten vorhandenen Ladungsmenge variiert.

Nach einer Ausbildung der Erfindung sind die in einer jeweiligen Spalte angeordneten Pixel über eine gemeinsame Spaltenleitung mit einer von der Steuereinrichtung steuerbaren Spaltenverstärkerschaltung verbunden, die einen Verstärker und eine der Anzahl der aufeinanderfolgenden Transfer-Steuersignale entsprechende Anzahl an Teilwert-Signalspeichern umfasst, wobei die Steuereinrichtung derart ausgebildet ist, dass jedes der den Ladungstransfers entsprechenden Teilwert-Messsignale an einen eigenen der Teilwert-Signalspeicher übermittelt wird. Bevorzugt werden die Teilwert-Messsignale erst nach ihrer Speicherung in den Teilwert-Signalspeichern zusammengefasst und gemeinsam digitalisiert. Das zusammengefasste Signal bzw. Gesamtwert-Messsignal kann dann - da beim Auslesen alle Teilwert-Signalspeicher auf einen gemeinsamen Eingang des betreffenden Verstärkers oder A/D-Wandlers geschaltet werden (Aufaddieren der Kapazitäten der Teilwert-Signalspeicher) - auch kleiner sein als eines oder mehrere der Teilwert-Messsignale. Grundsätzlich ist es jedoch auch möglich, dass zunächst jedes der Teilwert-Messsignale einzeln digitalisiert und als digitaler Wert in dem jeweiligen Teilwert-Signalspeicher abgelegt wird, wobei anschließend die digitalen Werte zusammengefasst werden.

Beispielsweise können drei oder mehr Teilwert-Signalspeicher vorgesehen sein. Die Teilwert-Signalspeicher können identische Kapazitäten aufweisen und/oder integriert ausgebildet sein.

Nach einer weiteren Ausbildung der Erfindung umfasst die jeweilige Spaltenverstärkerschaltung erste Schaltermittel, wobei die Teilwert-Signalspeicher über die ersten Schaltermittel gleichzeitig mit einem ersten Eingang des Verstärkers verbindbar sind. Hierdurch können die Teilwert-Messsignale auf einfache Weise zusammengefasst werden, um das vorstehend beschriebene, der in dem Detektorelement erzeugten Ladung proportionale Gesamtwert-Messsignal zu erzeugen.

Insbesondere kann die Steuereinrichtung derart ausgebildet sein, dass mittels der Wandlerschaltung nach einer Aktivierung der Rücksetzeinrichtung ein dem Referenzwert der Ladung entsprechendes Referenzwert-Messsignal erzeugt und an einen Referenzwert-Signalspeicher der jeweiligen Spaltenverstärkerschaltung übermittelt wird, wobei der Referenzwert-Signalspeicher mit einem zweiten Eingang des Verstärkers verbunden oder verbindbar ist. Das Referenzwert-Messsignal entspricht einer definierten Ladung in dem Ausleseknoten, insbesondere einer Null-Ladung. Das Referenzwert-Messsignal kann grundsätzlich vor oder nach der Erzeugung eines beliebigen der Teilwert-Messsignale erzeugt werden.

Nach einer anderen Ausbildung der Erfindung umfasst die jeweilige Spaltenverstärkerschaltung einen zusätzlichen Verstärker und einen Restwert-Signalspeicher, wobei die Steuereinrichtung derart ausgebildet ist, dass eines der den Ladungstransfers entsprechenden Teilwert-Messsignale gleichzeitig an den zugeordneten Teilwert-Signalspeicher und den Restwert-Signalspeicher übermittelt wird. Das in dem Restwert-Signalspeicher vorhandene Teilwert-Messsignal kann dann mit dem vorstehend beschriebenen Gesamtwert-Messsignal verglichen werden. Abhängig von dem Ergebnis dieses Vergleichs kann das in dem Restwert-Signalspeicher vorhandene Teilwert-Messsignal, das Gesamtwert-Messsignal oder eine Kombination aus diesen beiden Signalen zur Bestimmung der in dem Detektorelement erzeugten Ladung verwendet werden.

Bei dem vorgenannten wenigstens einen Teilwert-Messsignal handelt es sich insbesondere um dasjenige Messsignal, das dem letzten Ladungstransfer entspricht. Wird festgestellt, dass lediglich bei dem letzten Ladungstransfer auch tatsächlich Ladung von dem Detektorelement an den Ausleseknoten transferiert wurde, kann allein das in dem Restwert-Signalspeicher gespeicherte Teilwert-Messsignal zur Bestimmung der in dem Detektorelement erzeugten Ladung verwendet werden, wodurch das Signal/Rausch-Verhältnis gegenüber der Verwendung des vorstehend beschriebenen Gesamtwert-Messsignals verbessert wird.

Bevorzugt ist der jeweilige Restwert-Signalspeicher mit einem ersten Eingang des zusätzlichen Verstärkers verbunden oder verbindbar und/oder ist der vorstehend beschriebene Referenzwert-Signalspeicher mit einem zweiten Eingang des zusätzlichen Verstärkers verbunden oder verbindbar.

Vorteilhaft ist es, wenn der (dem Restwert-Signalspeicher zugeordnete) zusätzliche Verstärker einen höheren Verstärkungsfaktor besitzt als der genannte (den Teilwert-Signalspeichern zugeordnete) Verstärker, wobei ein entsprechend angepasster Übergang vorgesehen sein kann, um zur Bestimmung der in dem Detektorelement erzeugten Ladung wahlweise das in dem Restwert-Signalspeicher vorhandene Teilwert-Messsignal, das Gesamtwert-Messsignal oder eine Kombination aus diesen beiden Signalen zu verwenden. Der Signalpfad mit dem geringeren Verstärkungsfaktor (für das Gesamtwert-Messsignal) ermöglicht hierbei die volle Aussteuerung, während sich für den Signalpfad mit dem höheren Verstärkungsfaktor (für das Signal des Restwert-Signalspeichers) hinsichtlich des Rauschens und der Störungen aller Stufen, die nach der betreffenden Verstärkung vorgesehen sind, ein verbessertes Signal/Rauschverhältnis ergibt. Durch eine Kombination dieser beiden Kanäle wird somit eine noch höhere Dynamik erzielt.

Um die Spaltenleitung wahlweise mit einem oder mehreren der Signalspeicher zu verbinden, umfasst die jeweilige Spaltenverstärkerschaltung zweite Schaltermittel. Bevorzugt ist zwischen der Spaltenleitung und jedem der Signalspeicher ein eigener Schalter vorgesehen.

Vorzugsweise sind die Signalspeicher, d.h. die Teilwert-Signalspeicher, der vorstehend beschriebene Referenzwert-Signalspeicher und der Restwert-Signalspeicher, jeweils als ein Kondensator ausgebildet.

Nach einer anderen Ausbildung der Erfindung ist der Bildsensor derart ausgebildet, dass die den Ladungstransfers eines einzigen Belichtungsvorgangs entsprechenden Teilwert-Messsignale einzeln digitalisiert und die digitalisierten Teilwert-Messsignale anschließend zu einem digitalen Gesamtwert-Messsignal zusammengesetzt werden. Beispielsweise kann für jede Spalte ein eigener A/D-Wandler oder für mehrere oder alle Spalten ein gemeinsamer A/D-Wandler vorgesehen sein.

Insbesondere kann für jede Spalte genau ein analoger Signalspeicher vorgesehen sein, wobei die Steuereinrichtung derart ausgebildet ist, dass jedes der den Ladungstransfers entsprechenden Teilwert-Messsignale oder zusätzlich auch zumindest ein Referenzwert-Messsignal an den analogen Signalspeicher übermittelt wird, um danach jeweils digitalisiert zu werden.

Weiterbildungen des erfindungsgemäßen Verfahrens ergeben sich in analoger Weise aus den Weiterbildungen des erfindungsgemäßen Bildsensors.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: einen 4-Transistor CMOS-Bildsensor gemäß dem Stand der Technik, wobei von dem Bildsensor lediglich ein Pixel und eine dem Pixel zugeordnete Spaltenverstärkerschaltung dargestellt ist,
- Fig. 2: einen 4-Transistor CMOS-Bildsensor gemäß der vorliegenden Erfindung in einer zu Fig. 1 analogen Darstellung,
- Fig. 3: einen teilweisen Querschnitt durch das Pixel aus Fig. 2,
- Fig. 4 bis 18: Potentialdiagramme zu dem in Fig. 3 dargestellten Querschnitt zu verschiedenen Zeitpunkten während des Auslesens des Pixels, und
- Fig. 19: einen weiteren 4-Transistor CMOS-Bildsensor gemäß der vorliegenden Erfindung in einer zu Fig. 1 analogen Darstellung.

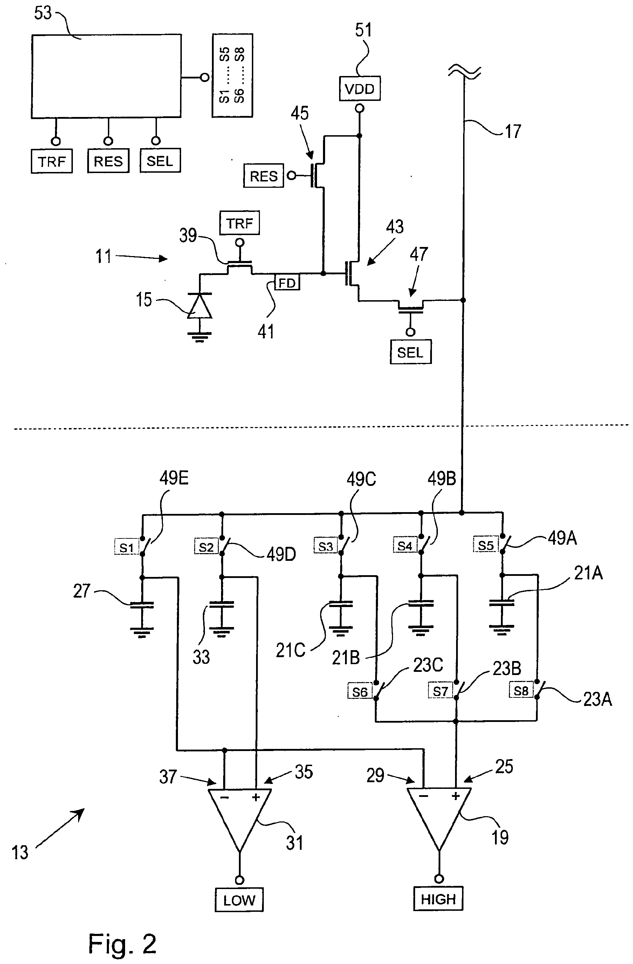

Der in Fig. 2 dargestellte erfindungsgemäße Bildsensor umfasst ein Pixel 11 und eine Spaltenleitung 17, das dem in Fig. 1 zum Stand der Technik beschriebenen Pixel 11 bzw. die der in Fig. 1 zum Stand der Technik beschriebenen Spaltenleitung 17 entspricht. Darüber hinaus umfasst der Bildsensor gemäß Fig. 2 eine Verstärkerschaltung 13, die einen dem Verstärker 131 aus Fig.1 entsprechenden Verstärker 31 (mit einem positiven Eingang 35 und einem negativem Eingang 37), der im folgenden als zusätzlicher Verstärker 31 bezeichnet wird, einen dem Kondensator 133 aus Fig. 1 entsprechenden Restwert-Kondensator 33, einen dem Kondensator 127 aus Fig. 1 entsprechenden Referenzwert-Kondensator 27, einen dem Schalter 149E aus Fig. 1 entsprechenden Schalter 49E und einen dem Schalter 149D aus Fig. 1 entsprechenden Schalter 49D umfasst. Die vorstehenden Bauelemente sind in derselben Art untereinander verbunden, wie die entsprechenden Bauelemente aus Fig. 1. Die vorstehenden Ausführungen zu Fig. 1 sind deshalb auch Teil der Offenbarung der Erfindung.

Der Bildsensor gemäß Fig. 2 umfasst ferner drei parallel zueinander und jeweils gegen Masse geschaltete Teilwert-Kondensatoren 21A, 21B, 21C, die identisch sind und jeweils über einen eigenen Schalter 49A, 49B, 49C, die im folgenden jeweils als zweite Schalter 49A, 49B, 49C bezeichnet werden, mit der Spaltenleitung 17 verbindbar sind. Darüber hinaus ist für jeden Teilwert-Kondensator 21A, 21B, 21C ein weiterer Schalter 23A, 23B, 23C vorgesehen, wobei die weiteren Schalter 23A, 23B, 23C im folgenden jeweils als erste Schalter 23A, 23B, 23C bezeichnet werden. Die drei Teilwert-Kondensatoren 21A, 21B, 21C sind über die ersten Schalter 23A, 23B, 23C miteinander und gleichzeitig mit dem positiven Eingang 25 eines Verstärkers 19 verbindbar. Der negative Eingang 29 des Verstärkers 19 ist mit dem Referenzwert-Kondensator 27 verbunden.

Außerdem umfasst der Bildsensor gemäß Fig. 2 eine der Steuereinrichtung 153 aus Fig.1 entsprechende Steuereinrichtung 53, die neben den bereits zu Fig. 1 beschriebenen Bauelementen auch die ersten Schalter 23A, 23B, 23C und die zweiten Schalter 49A, 49B, 49C (über die Steuerleitungen S3, S4, S5, S6, S7, S8) steuert.

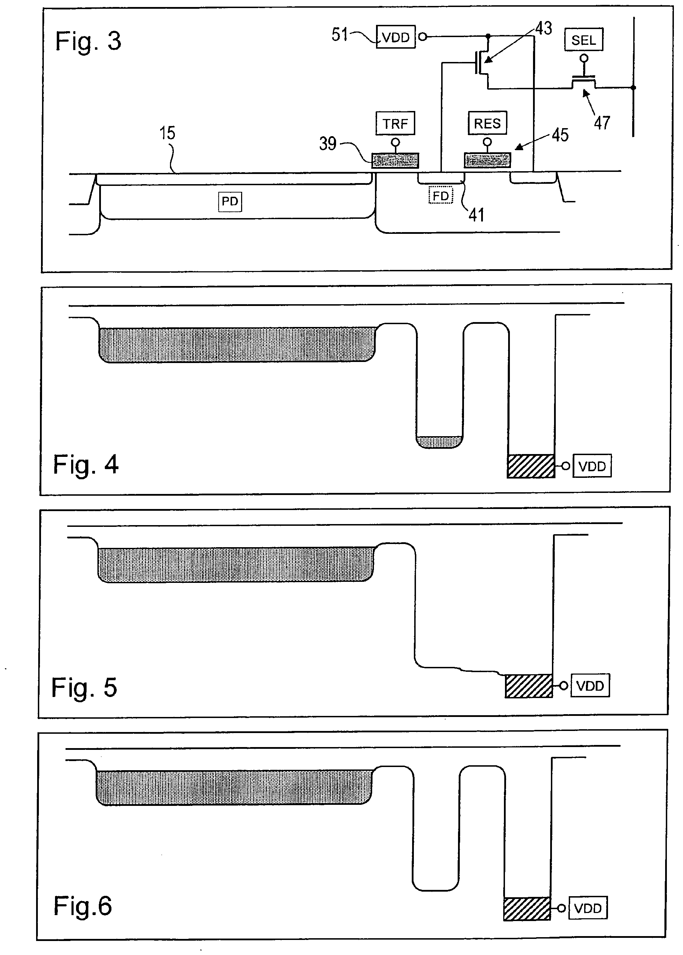

Fig. 3 zeigt ein Halbleitersubstrat, in dem die Pinned-Diode 15 vorgesehen ist, die über ein Transfer-Gate 39 mit dem als "floating diffusion" ausgebildeten Ausleseknoten 41 ladungsgekoppelt ist. Über den Rücksetz-FET 45 ist der Ausleseknoten 41 mit einem diffundierten Kanalanschluss, an den die positive Versorgung 51 angelegt ist, verbindbar.

Nachfolgend wird die Funktionsweise des Pixels 11 des erfindungsgemäßen Bildsensors der Fig. 2 und 3 anhand der Fig. 4 bis 18 exemplarisch basierend auf einer 3.3V-CMOS-Technologie beschrieben, wobei die in der Pinned-Diode 15 erzeugte Ladung in drei Ladungstransferschritten ausgelesen wird. Alternativ kann der Auslesevorgang jedoch auch in mehr als drei Schritten erfolgen.

Nach einem einzigen, ununterbrochenen Belichtungsvorgang ist die Pinned-Diode 15 bzw. deren Potentialtopf mit Ladung gefüllt, wie in Fig. 4 (nach der Belichtung, unmittelbar vor dem Auslesen) dargestellt ist. Der Ausleseknoten 41 bzw. dessen Potentialtopf enthält ebenfalls eine geringe Menge an Ladung, die durch Leckströme und/oder Streulicht erzeugt wurde.

Zum Auslesen wird zunächst an die Steuerleitung RES eine Spannung von 3.3V angelegt. Dadurch kann, wie in Fig. 5 (Reset 1) gezeigt ist, die in der Pinned-Diode 15 erzeugte Ladung aus dem Ausleseknoten 41 zu der positiven Versorgungsspannung 51 abfließen. Die Steuerleitung RES wird dann wieder auf 0V gelegt (Fig. 6, Ende Reset 1). Hierdurch wird sichergestellt, dass der Ausleseknoten 41 vor einem ersten Ladungstransfer, wie er nachstehend beschrieben wird, nicht bereits Ladung enthält.

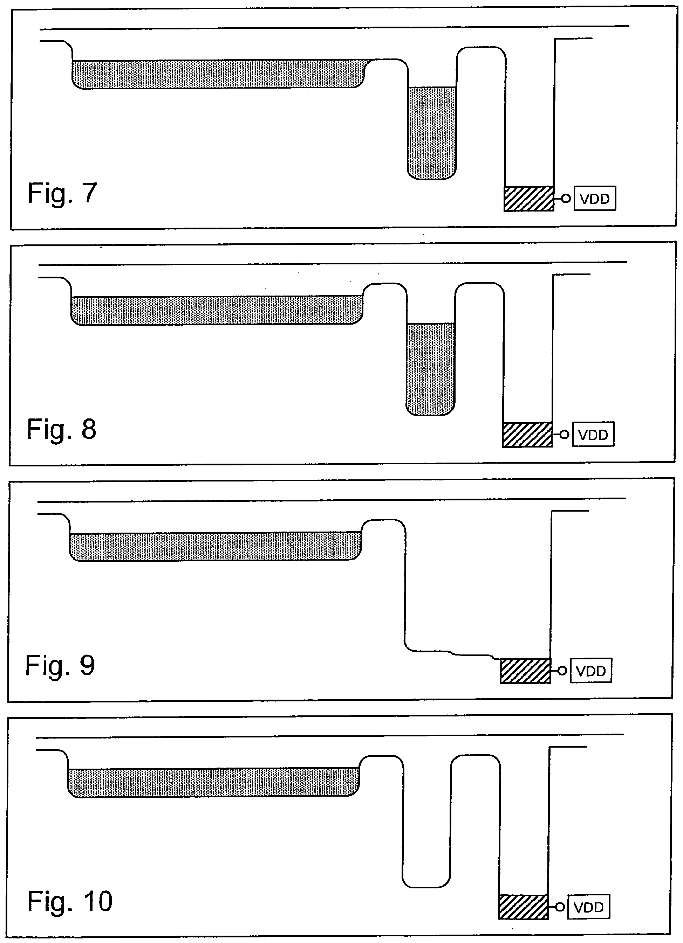

Gemäß Fig. 7 (Transfer 1) wird dann mittels eines ersten Transfer-Steuersignals an die Steuerleitung TRF eine mittlere Spannung von 2.5V angelegt, so dass ein erster Teil der in der Pinned-Diode 15 erzeugten Ladung in den Ausleseknoten 41 fließen kann. Anschließend wird die Steuerleitung TRF wieder auf 0V gelegt, so dass sich im Ausleseknoten 41 nun der erste Teil der Ladung befindet (Fig. 8, Ende Transfer 1).

Danach wird die Steuerleitung SEL auf eine Spannung von 3.3V gelegt und der zweite Schalter 49A wird geschlossen. Dadurch wird der durch die Ladung im Ausleseknoten 41 über den Wandler-FET 43 erzeugte Spannungspegel über den Auswahl-FET 47 auf die Spaltenleitung 17 geschaltet und somit zu dem Teilwert-Kondensator 21A geführt (Lesen Signal 1). Nachdem das System eingeschwungen ist, wird der Teilwert-Kondensator 21A durch Öffnen des zweiten Schalters 49A wieder von dem Pixel 11 getrennt, so dass in dem Teilwert-Kondensator 21A in Form einer entsprechenden Ladung letztlich ein analoges erstes Teilwert-Spannungssignal gespeichert ist, das der nach dem ersten Ladungstransfer in dem Ausleseknoten 41 vorhandenen Ladung proportional ist.

Nun wird die Steuerleitung RES auf eine Spannung von 3.3V gelegt, so dass die Ladung aus dem Ausleseknoten 41 zur positiven Versorgung 51 abfließen kann (Fig. 9, Reset 2). Die Steuerleitung RES wird dann wieder auf 0V gelegt (Fig. 10, Ende Reset 2). Hierdurch wird wiederum sichergestellt, dass der Ausleseknoten 41 vor einem zweiten Ladungstransfer, wie er nachstehend beschrieben wird, nicht bereits Ladung enthält.

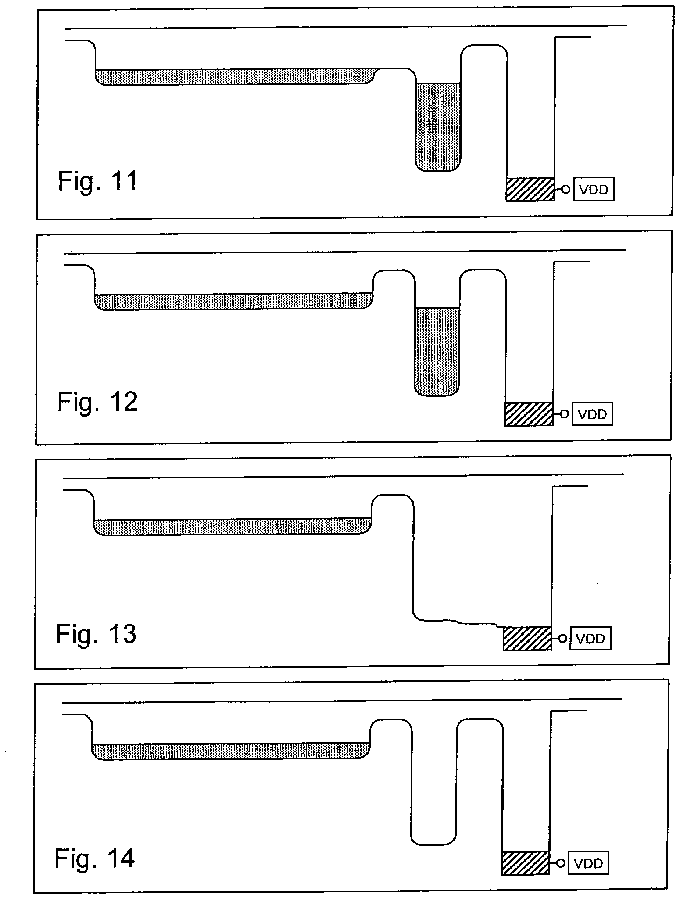

Gemäß Fig. 11 (Transfer 2) wird mittels eines zweiten Transfer-Steuersignals die Steuerleitung TRF auf eine etwas höhere Spannung von 2.8V gelegt, so dass ein zweiter Teil der in der Pinned-Diode 15 erzeugten Ladung in den Ausleseknoten 41 fließen kann. Anschließend wird die Steuerleitung TRF wieder auf 0V gelegt, so dass sich im Ausleseknoten 41 nun der zweite Teil der Ladung befindet (Fig. 12, Ende Transfer 2).

Anschließend wird der zweite Schalter 49B geschlossen. Dadurch wird der durch den zweiten Ladungstransfer verursachte Spannungspegel des Ausleseknotens 41 über den Wandler-FET 43 und den Auswahl-FET 47 auf die Spaltenleitung 17 und somit zu dem Teilwert-Kondensator 21B geführt (Lesen Signal 2). Nachdem das System eingeschwungen ist, wird der Kondensator 21B durch Öffnen des zweiten Schalters 49B wieder von dem Pixel 11 getrennt, so dass in dem Teilwert-Kondensator 21B ein analoges zweites Teilwert-Spannungssignal gespeichert ist, das der nach dem zweiten Ladungstransfer in dem Ausleseknoten 41 vorhandenen Ladung proportional ist.

Hiernach wird die Steuerleitung RES auf eine Spannung von 3.3V gelegt, so dass die Ladung aus dem Ausleseknoten 41 zur positiven Versorgung 51 abfließen kann (Fig. 13, Reset 3). Die Steuerleitung RES wird dann wieder auf 0V gelegt (Fig. 14, Ende Reset 2). Hierdurch wird sichergestellt, dass der Ausleseknoten 41 vor der Erzeugung eines Referenzwert-Spannungssignals, wie es nachstehend beschrieben wird, nicht bereits Ladung enthält.

Anschließend wird - nun ohne neuerliches Anlegen eines Transfer-Steuersignals an die Steuerleitung TRF - der zweite Schalter 49E geschlossen. Dadurch wird der Spannungspegel des Ausleseknotens 41 über den Wandler-FET 43 und den Auswahl-FET 47 auf die Spaltenleitung 17 geschaltet und somit zu dem Referenzwert-Kondensator 27 geführt (Lesen Referenz). Nachdem das System eingeschwungen ist, wird der Referenzwert-Kondensator 27 durch Öffnen des zweiten Schalters 49E wieder von dem Pixel 11 getrennt.

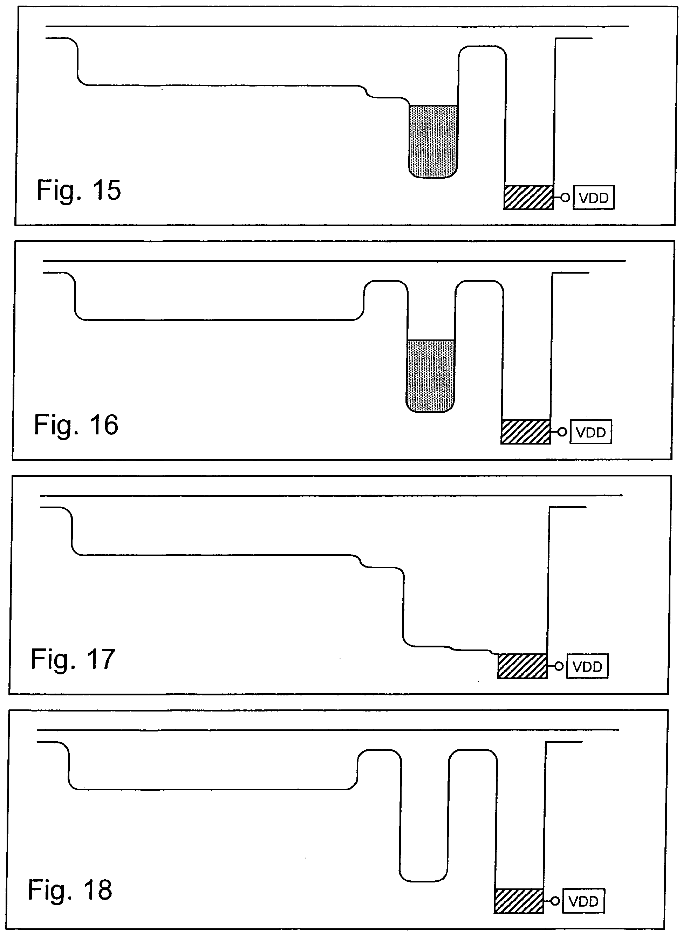

In einem nächsten Schritt wird mittels eines dritten Transfer-Steuersignals die Steuerleitung TRF auf die volle Spannung von 3.3V gelegt. Dadurch kann der gesamte Rest der in der Pinned-Diode 15 erzeugten Ladung in den Ausleseknoten 41 fließen (Fig. 15, Transfer 3). Anschließend wird die Steuerleitung TRF wieder auf 0V gelegt, so dass sich im Ausleseknoten 41 nun der dritte Teil der Ladung befindet (Fig. 16, Ende Transfer 3).

In einem weiteren Schritt werden dann die zweiten Schalter 49C, 49D geschlossen. Dadurch wird der durch den dritten Ladungstransfer bewirkte Spannungspegel des Ausleseknotens 41 über den Wandler-FET 43 und den Auswahl-FET 47 auf die Spaltenleitung 17 geschaltet und somit sowohl zu dem Teilwert-Kondensator 21C als auch zu dem Restwert-Kondensator 33 geführt. Nachdem das System eingeschwungen ist, werden der Teilwert-Kondensator 21C und der Restwert-Kondensator 33 durch Öffnen der zweiten Schalter 49C, 49D wieder von dem Pixel 11 getrennt, so dass in dem Teilwert-Kondensator 21C und dem Restwert-Kondensator jeweils ein analoges drittes Teilwert-Spannungssignal gespeichert ist, das der nach dem dritten Ladungstransfer in dem Ausleseknoten 41 vorhandenen Ladung proportional ist.

Danach wird die Steuerleitung SEL wieder auf 0V gelegt. Die Steuerleitungen RES und TRF werden auf eine Spannung von 3.3V gelegt (Fig. 17, Reset 4). Dadurch wird (werden) die in dem Ausleseknoten 41 befindliche Ladung (und eventuelle Restladungen, die sich in der Pinned-Diode 15 befinden) entfernt. Anschließend werden die Steuerleitungen RES und TRF wieder auf 0V gelegt (Fig. 18, Ende Reset 4). Das Pixel ist "leer" und der nächste Belichtungsvorgang kann beginnen.

Schließlich werden die ersten Schalter 23A, 23B, 23C geschlossen. Die Spannungen LOW und HIGH, die nun an den Verstärkern 19, 31 anliegen, werden zu einem gemeinsamen A/D-Wandler oder zu getrennten A/D-Wandlern geführt und digitalisiert. Durch Subtrahieren des Referenzwert-Spannungssignals, d.h. des Spannungssignals des leeren Ausleseknotens 41, von dem Gesamtwert-Spannungssignal (an dem Verstärker 19) bzw. von dem Teilwert-Spannungssignal des dritten Ladungstransfers (an dem zusätzlichen Verstärker 31) wird ein geringeres Rauschen erreicht, da die Ladungsunsicherheit (KTC-Rauschen) des Ausleseknotens 41 sowie alle Offset-Spannungen abgezogen werden.

Grundsätzlich ist es auch möglich, die beiden ersten Auslesevorgänge mit derselben Spannung an TRF durchzuführen, z.B. 2.8V.

Insbesondere sind die Spannungswerte der Transfer-Steuersignale an die Tiefe des Potentialtopfs der Pinned-Diode 15 angepasst.

Wird die Pinned-Diode 15 durch den jeweiligen Belichtungsvorgang weniger als bis zu einem Niveau gefüllt, das der Höhe der durch das Transfer-Gate 39 gesteuerten Potentialbarriere bei Anliegen des zweiten Transfer-Steuersignals entspricht, insbesondere weniger als zu einem Drittel, werden bei den ersten beiden Auslesevorgängen keine Ladungen von der Pinned-Diode 15 an den Ausleseknoten 41 übertragen. Die beiden Teilwert-Kondensatoren 21A, 21B enthalten somit jeweils das Teilwert-Spannungssignal des "leeren" Ausleseknotens 41, d.h. das Referenzwert-Spannungssignal, das auch in dem Referenzwert-Kondensator 27 gespeichert ist. Die Spannung HIGH am Ausgang des Verstärkers 19 beträgt daher genau ein Bruchteil in Höhe von einem Drittel der Spannung LOW am Ausgang des zusätzlichen Verstärkers 31. In diesem Fall wird zur Bestimmung der in der Pinned-Diode 15 erzeugten Ladung die Spannung LOW verwendet und HIGH wird ignoriert.

Es ist ein besonderer Vorteil der Erfindung, dass der vorgenannte Bruchteil (hier: ein Drittel) ohne Kalibrieren der Spaltenverstärkerschaltung 13 genau bekannt ist, da aufgrund der integrierten Ausbildung der Kondensatoren 21A, 21B, 21C und 33 diese mit identischer jeweiliger Kapazität versehen sein können.

Ist die Pinned-Diode 15 mehr als bis zu dem vorstehend genannten Niveau gefüllt, werden bei zumindest zwei, insbesondere den drei Auslesevorgängen Ladungen von der Pinned-Diode 15 an den Ausleseknoten 41 übertragen. Die Kondensatoren 21B, 21C bzw. 21A, 21B, 21C enthalten somit die entsprechenden Teilwert-Spannungssignale des jeweils gefüllten Ausleseknoten 41. Die Spannung LOW am Ausgang des zusätzlichen Verstärkers 31 ist in diesem Fall ungültig und wird ignoriert, da sie nicht die gesamte in der Pinned-Diode 15 erzeugte Ladung repräsentiert. Zur Bestimmung der in der Pinned-Diode 15 erzeugten Ladung wird in diesem Fall folglich nur die Spannung HIGH verwendet.

Bei einer starken Belichtung, bei der eine Ladung von mehr als beispielsweise 12000 Elektronen in der Pinned-Diode 15 erreicht wird, wird also auf das Signal HIGH am Ausgang des Verstärkers 19 umgeschaltet.

Somit wird für jedes Pixel 11 entweder das Signal HIGH oder das Signal LOW ausgewählt, wobei das Verhältnis der Gesamtkapazität der Kondensatoren 21A, 21B und 21C zu der Kapazität des Kondensators 33 berücksichtigt wird (Signal HIGH entspricht einem Drittel des Signals LOW bei identischen Kapazitäten). In einem Übergangsbereich können auch beide Signale berücksichtigt, d.h. miteinander verrechnet werden (z.B. für eine Ladung von 10000 bis 12000 Elektronen in der Pinned-Diode 15). Die für die einzelnen Pixel 11 ausgewählten Signale werden schließlich zu einem gemeinsamen Bild zusammengesetzt.

Hierdurch kann der Dynamikumfang des Bildsensors gegenüber einem Bildsensor, der lediglich das Signal LOW liefert, erhöht werden.

In einer bevorzugten Ausführungsform besitzt der zusätzliche Verstärker 31 (für das Signal LOW) einen höheren Verstärkungsfaktor (z.B. gain = 4) als der genannte Verstärker 19 (z.B. gain =1 für das Signal HIGH). Hierdurch wird die lineare Dynamik gesteigert. Hierbei ist es von Vorteil, dass die beiden Verstärker 19, 31 mit den unterschiedlichen Verstärkungsfaktoren am Anfang des Signalpfads angeordnet sind, d.h. die unterschiedliche Verstärkung der betreffenden Teilwert-Messsignale erfolgt sehr "früh" im Signalverarbeitungspfad. Vorzugsweise erfolgt das Verrechnen der beiden Signale miteinander möglichst spät im Signalverarbeitungspfad, und es sind getrennte A/D-Wandler vorgesehen.

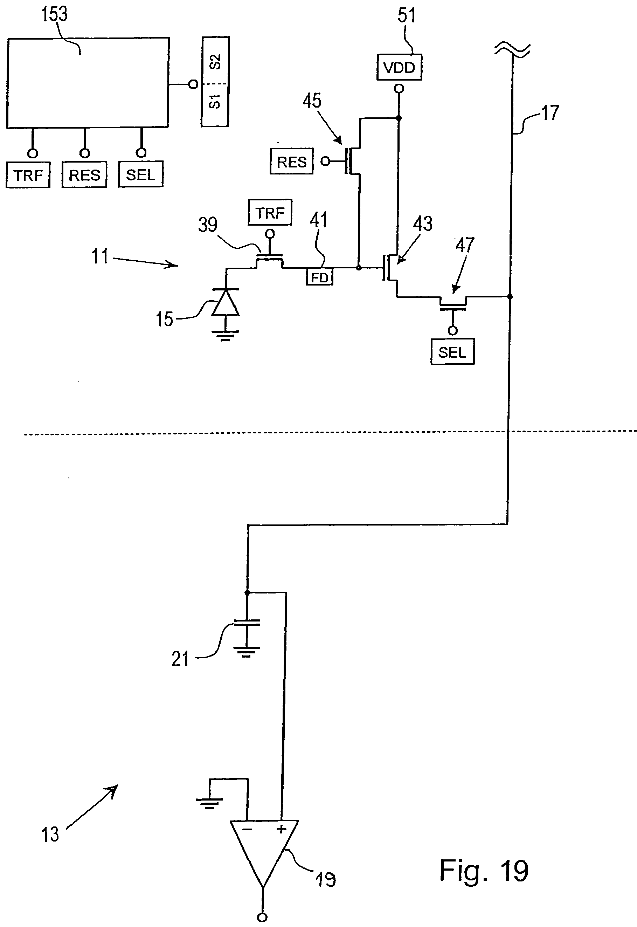

Fig. 19 zeigt eine weitere Ausführungsform der Erfindung mit gegenüber der Ausführungsform gemäß Fig. 2 vereinfachter Spaltenverstärkerschaltung 13. Das Auslesen der Pinned-Diode 15 erfolgt grundsätzlich analog wie im Zusammenhang mit Fig. 3 bis 18 beschrieben, d.h. die während eines einzigen Belichtungsvorgangs in der Pinned-Diode 15 erzeugte Ladung wird in mehreren Portionen zu dem Ausleseknoten 41 transferiert. Der Bildsensor gemäß Fig. 19 ist jedoch derart ausgebildet, dass die den Ladungstransfers eines einzigen Belichtungsvorgangs entsprechenden Teilwert-Messsignale einzeln digitalisiert und die digitalisierten Teilwert-Messsignale anschließend zu einem digitalen Gesamtwert-Messsignal zusammengesetzt werden. Hierfür wird in dem gezeigten Beispiel lediglich ein einziger analoger Signalspeicher 21 verwendet, in dem die Teilwert-Messsignale und das Referenzwert-Messsignal nacheinander gespeichert werden, bevor sie jeweils von einem nicht gezeigten A/D-Wandler digitalisiert werden, welcher dem Verstärker 19 nachgeschaltet ist.

Der Signalspeicher 21 kann auch entfallen, wenn das jeweilige Messsignal unmittelbar digitalisiert wird.

### Bezugszeichenliste

- 11: Pixel
- 13, 113: Spaltenverstärkerschaltung
- 15: Pinned-Diode
- 17: Spaltenleitung
- 19: Verstärker
- 21: Teilwert-Kondensator
- 23: erster Schalter
- 25: positiver Eingang
- 27, 127: Referenzwert-Kondensator
- 29: negativer Eingang
- 31, 131: zusätzlicher Verstärker
- 33, 133: Restwert-Kondensator
- 35, 135: positiver Eingang
- 37, 137: negativer Eingang
- 39: Transfer-Gate
- 41: Ausleseknoten
- 43: Wandler-FET
- 45: Rücksetz-FET
- 47: Auswahl-FET
- 49, 149: zweiter Schalter
- 51: positive Versorgung
- 53, 153: Steuereinrichtung

## Patentansprüche

1. Bildsensor, insbesondere CMOS-Bildsensor, für elektronische Kameras,
mit einer Vielzahl von in Zeilen und Spalten angeordneten Pixeln (11), wobei die Pixel (11) jeweils umfassen:
ein lichtempfindliches Detektorelement (15), um aus einfallendem Licht elektrische Ladung zu erzeugen,
ein Transfer-Gate (39),
einen Ausleseknoten (41), der über das Transfer-Gate (39) mit dem Detektorelement (15) ladungsgekoppelt ist,
eine Wandlerschaltung (43), um ein Messsignal zu erzeugen, das einer in dem Ausleseknoten (41) vorhandenen Ladung proportional ist, und
eine Rücksetzeinrichtung (45), um eine in dem Ausleseknoten (41) vorhandene Ladung auf einen Referenzwert rückzusetzen; und ferner mit einer Steuereinrichtung (53) zum Steuern des Transfer-Gates (39) und der Rücksetzeinrichtung (45) des jeweiligen Pixels (11);
wobei die Steuereinrichtung (53) derart ausgelegt ist, dass die während eines einzigen Belichtungsvorgangs in dem jeweiligen Detektorelement (15) erzeugte Ladung in mehreren Portionen von dem Detektorelement (15) zu dem Ausleseknoten (41) transferiert wird, indem wenigstens drei aufeinanderfolgende Transfer-Steuersignale an das Transfer-Gate (39) angelegt werden, so dass ein jeweiliger Ladungstransfer von dem Detektorelement (15) zu dem Ausleseknoten (41) ermöglicht wird, um mittels der Wandlerschaltung (43) für jeden Ladungstransfer ein eigenes Teilwert-Messsignal zu erzeugen, das der in dem Ausleseknoten (41) aufgrund des jeweiligen Ladungstransfers vorhandenen Ladung proportional ist, wobei die wenigstens drei Transfer-Steuersignale unterschiedlich große Steuerwerte aufweisen;
**dadurch gekennzeichnet,**
**dass** der Absolutwert des Steuerwerts eines jeden späteren der wenigstens drei Transfer-Steuersignale größer ist als der Absolutwert des hierzu jeweils früheren der wenigstens drei Transfer-Steuersignale.

2. Bildsensor nach Anspruch 1,
**dadurch gekennzeichnet,**
**dass** die Steuereinrichtung (53) derart ausgelegt ist, dass zwischen den jeweiligen aufeinanderfolgenden Transfer-Steuersignalen die Rücksetzeinrichtung (45) aktiviert wird.

3. Bildsensor nach Anspruch 1 oder 2,
**dadurch gekennzeichnet,**
**dass** die in einer jeweiligen Spalte angeordneten Pixel (11) über eine gemeinsame Spaltenleitung (17) mit einer von der Steuereinrichtung (53) steuerbaren Spaltenverstärkerschaltung (13) verbunden sind, die wenigstens einen Verstärker (19) und eine der Anzahl der aufeinanderfolgenden Transfer-Steuersignale entsprechende Anzahl an Teilwert-Signalspeichern (21A, 21B, 21C) umfasst, wobei die Steuereinrichtung (53) derart ausgebildet ist, dass jedes der den Ladungstransfers entsprechenden Teilwert-Messsignale an einen eigenen der Teilwert-Signalspeicher (21A, 21B, 21C) übermittelt wird.

4. Bildsensor nach Anspruch 3,
**dadurch gekennzeichnet,**
**dass** die Teilwert-Signalspeicher (21A, 21B, 21C) identische Kapazitäten aufweisen und/oder integriert ausgebildet sind.

5. Bildsensor nach Anspruch 3 oder 4,
**dadurch gekennzeichnet,**
**dass** die jeweilige Spaltenverstärkerschaltung (13) erste Schaltermittel (23A, 23B, 23C) umfasst, wobei die Teilwert-Signalspeicher (21A, 21B, 21C) über die ersten Schaltermittel (23A, 23B, 23C) gleichzeitig mit einem ersten Eingang (25) des Verstärkers (19) verbindbar sind.

6. Bildsensor nach Anspruch 5,
**dadurch gekennzeichnet,**
**dass** die Steuereinrichtung (53) derart ausgebildet ist, dass mittels der Wandlerschaltung (43) nach einer Aktivierung der Rücksetzeinrichtung (45) ein dem Referenzwert der Ladung entsprechendes Referenzwert-Messsignal erzeugt und an einen Referenzwert-Signalspeicher (27) der jeweiligen Spaltenverstärkerschaltung (13) übermittelt wird, wobei der Referenzwert-Signalspeicher (27) mit einem zweiten Eingang (29) des Verstärkers (19) verbunden oder verbindbar ist.

7. Bildsensor nach einem der Ansprüche 3 bis 6,
**dadurch gekennzeichnet,**
**dass** die jeweilige Spaltenverstärkerschaltung (13) einen zusätzlichen Verstärker (31) und einen Restwert-Signalspeicher (33) umfasst, wobei die Steuereinrichtung (53) derart ausgebildet ist, dass eines der den Ladungstransfers entsprechenden Teilwert-Messsignale gleichzeitig an den zugeordneten Teilwert-Signalspeicher (21C) und den Restwert-Signalspeicher (33) übermittelt wird.

8. Bildsensor nach Anspruch 7,
**dadurch gekennzeichnet,**
**dass** es sich bei dem einen Teilwert-Messsignal um dasjenige Teilwert-Messsignal handelt, das dem letzten Ladungstransfer entspricht.

9. Bildsensor nach Anspruch 7 oder 8,
**dadurch gekennzeichnet,**
**dass** der jeweilige Restwert-Signalspeicher (33) mit einem ersten Eingang (35) des zusätzlichen Verstärkers (31) verbunden oder verbindbar ist.

10. Bildsensor nach einem der Ansprüche 7 bis 9,
**dadurch gekennzeichnet,**
**dass** ein Referenzwert-Signalspeicher (27) mit einem zweiten Eingang (37) des zusätzlichen Verstärkers (31) verbunden oder verbindbar ist.

11. Bildsensor nach einem der Ansprüche 7 bis 10,
**dadurch gekennzeichnet,**
**dass** der zusätzliche Verstärker (31) einen höheren Verstärkungsfaktor besitzt als der wenigstens eine Verstärker (19).

12. Bildsensor nach einem der Ansprüche 3 bis 11,
**dadurch gekennzeichnet,**
**dass** die jeweilige Spaltenverstärkerschaltung (13) zweite Schaltermittel (49A, 49B, 49C, 49D, 49E) umfasst, wobei die Spaltenleitung (17) über die zweiten Schaltermittel (49A, 49B, 49C, 49D, 49E) wahlweise mit einem oder mehreren der Signalspeicher (21A, 21B, 21C, 27, 33) verbindbar ist.

13. Bildsensor nach Anspruch 2,
**dadurch gekennzeichnet,**
**dass** der Bildsensor derart ausgebildet ist, dass die den Ladungstransfers eines einzigen Belichtungsvorgangs entsprechenden Teilwert-Messsignale einzeln digitalisiert werden und die digitalisierten Teilwert-Messsignale anschließend zu einem digitalen Gesamtwert-Messsignal zusammengesetzt werden.

14. Verfahren zum Auslesen eines Bildsensors, insbesondere eines CMOS-Bildsensors, für elektronische Kameras, wobei der Bildsensor eine Vielzahl von in Zeilen und Spalten angeordneten Pixeln (11) umfasst, bei dem
mittels eines lichtempfindlichen Detektorelements (15) aus einfallendem Licht erzeugte elektrische Ladung an einen Ausleseknoten (41), der über ein Transfer-Gate (39) mit dem Detektorelement (15) ladungsgekoppelt ist, transferiert wird,
mittels einer Wandlerschaltung (43) ein Messsignal erzeugt wird, das einer in dem Ausleseknoten (41) vorhandenen Ladung proportional ist, und
mittels einer Rücksetzeinrichtung (45) eine in dem Ausleseknoten (41) vorhandene Ladung auf einen Referenzwert rückgesetzt wird,
wobei die während eines einzigen Belichtungsvorgangs in dem jeweiligen Detektorelement (15) erzeugte Ladung in mehreren Portionen von dem Detektorelement (15) zu dem Ausleseknoten (41) transferiert wird, indem wenigstens drei aufeinanderfolgende Transfer-Steuersignale an das Transfer-Gate (39) angelegt werden, so dass ein jeweiliger Ladungstransfer von dem Detektorelement (15) zu dem Ausleseknoten (41) ermöglicht wird, um mittels der Wandlerschaltung (43) für jeden Ladungstransfer ein eigenes Teilwert-Messsignal zu erzeugen, das der in dem Ausleseknoten (41) aufgrund des jeweiligen Ladungstransfers vorhandenen Ladung proportional ist, wobei die wenigstens drei Transfer-Steuersignale unterschiedlich große Steuerwerte aufweisen;
**dadurch gekennzeichnet,**
**dass** der Absolutwert des Steuerwerts eines jeden späteren der wenigstens drei Transfer-Steuersignale größer ist als der Absolutwert des hierzu jeweils früheren der wenigstens drei Transfer-Steuersignale.

## Claims

1. An image sensor, in particular a CMOS image sensor, for electronic cameras,
having a plurality of pixels (11) arranged in lines and columns, with each of the pixels (11) comprising:
a light-sensitive detector element (15) to generate electrical charge from incident light;
a transfer gate (39);
a readout node (41) which is charge coupled to the detector element (15) via the transfer gate (39);
a converter circuit (43) to generate a measurement signal which is proportional to a charge present in the readout node (41); and
a reset device (45) to reset a charge present in the readout node (41) to a reference value;
and furthermore having a control device (53) for the control of the transfer gate (39) and of the reset device (45) of the respective pixel (11),
wherein the control device (53) is configured such that the charge generated during a single exposure procedure in the respective detector element (15) is transferred from the detector element (15) to the readout node (41) in a plurality of portions by applying at least three sequential transfer control signals to the transfer gate (39) so that a respective charge transfer from the detector element (15) to the readout node (41) is made possible in order to generate a separate part value measurement signal for each charge transfer by means of the converter circuit (43), said part value measurement signal being proportional to the charge present in the readout node (41) on the basis of the respective charge transfer, with the at least three transfer control signals having control values of different sizes,
**characterized in that**
the absolute value of the control value of each later one of the at least three transfer control signals is larger than the absolute value of the control value of a respective earlier one of the at least three transfer control signals.

2. An image sensor in accordance with claim 1,
**characterized in that**
the control device (53) is configured such that the reset device (45) is activated between the respective sequential transfer control signals.

3. An image sensor in accordance with claim 1 or claim 2,
**characterized in that**
the pixels (11) arranged in a respective column are connected via a common column path (17) to a column amplifier circuit (13) which is controllable by the control device (53) and which comprises at least one amplifier (19) and a number of part value signal memories (21A, 21B, 21C) corresponding to the number of the sequential transfer control signals, with the control device (53) being configured such that each of the part value measurement signals corresponding to the charge transfers is transmitted to a separate one of the part value signal memories (21A, 21B, 21C).

4. An image sensor in accordance with claim 3,
**characterized in that**
the part value signal memories (21A, 21B, 21C) have identical capacities and/or are made in integrated form.

5. An image sensor in accordance with claim 3 or claim 4,
**characterized in that**
the respective column amplifier circuit (13) comprises first switch means (23A, 23B, 23C), with the part value signal memories (21A, 21B, 21C) being simultaneously connectable via the first switch means (23A, 23B, 23C) to a first input (25) of the amplifier (19).

6. An image sensor in accordance with claim 5,
**characterized in that**
the control device (53) is configured such that a reference value measurement signal corresponding to the reference value of the charge is generated by means of the converter circuit (43) after an activation of the reset device (45) and is transmitted to a reference value signal memory (27) of the respective column amplifier circuit (13), with the reference value signal memory (27) being connected or connectable to a second input (29) of the amplifier (19).

7. An image sensor in accordance with any one of the claims 3 to 6,
**characterized in that**
the respective column amplifier circuit (13) comprises an additional amplifier (31) and a residual value signal memory (33), with the control device (53) being configured such that one of the part value measurement signals corresponding to the charge transfers is simultaneously transmitted to the associated part value signal memory (21C) and to the residual value signal memory (33).

8. An image sensor in accordance with claim 7,
**characterized in that**
the one part value measurement signal is that part value measurement signal which corresponds to the last charge transfer.

9. An image sensor in accordance with claim 7 or claim 8,
**characterized in that**
the respective residual value signal memory (33) is connected or connectable to a first input (35) of the additional amplifier (31).

10. An image sensor in accordance with any one of the claims 7 to 9,
**characterized in that**
a reference value signal memory (27) is connected or connectable to a second input (37) of the additional amplifier (31).

11. An image sensor in accordance with any one of the claims 7 to 10,
**characterized in that**
the additional amplifier (31) has a higher amplification factor than the at least one amplifier (19).

12. An image sensor in accordance with any one of the claims 3 to 11,
**characterized in that**
the respective column amplifier circuit (13) comprises second switch means (49A, 49B, 49C, 49D, 49E), with the column path (17) being selectively connectable via the second switch means (49A, 49B, 49C, 49D, 49E) to one or more of the signal memories (21A, 21B, 21C, 27, 33).

13. An image sensor in accordance with claim 2,
**characterized in that**
the image sensor is configured such that the part value measurement signals corresponding to the charge transfers of a single exposure procedure are individually digitized and the digitized part value measurement signals are subsequently combined to form a digital total value measurement signal.

14. A method for the reading out of an image sensor, in particular of a CMOS image sensor, for electronic cameras, wherein the image sensor comprises a plurality of pixels (11) arranged in lines and columns, in which
electrical charge generated by means of a light-sensitive detector element (15) from incident light is transferred to a readout node (41) which is charge coupled to the detector element (15) via a transfer gate (39);
a measurement signal is generated by means of a converter circuit (43) and is proportional to a charge present in the readout node (41); and
a charge present in the readout node (41) is reset to a reference value by means of a reset device (45),
wherein the charge generated during a single exposure procedure in the respective detector element (15) is transferred from the detector element (15) to the readout node (41) in a plurality of portions by applying at least three sequential transfer control signals to the transfer gate (39) so that a respective charge transfer from the detector element (15) to the readout node (41) is made possible in order to generate a separate part value measurement signal for each charge transfer by means of the converter circuit (43), said part value measurement signal being proportional to the charge present in the readout node (41) on the basis of the respective charge transfer, with the at least three transfer control signals having control values of different sizes,
**characterized in that**
the absolute value of the control value of each later one of the at least three transfer control signals is larger than the absolute value of the control value of a respective earlier one of the at least three transfer control signals.

## Revendications

1. Capteur d'images, en particulier capteur d'images CMOS, pour des caméras électroniques, comportant
une multitude de pixels (11) disposés en lignes et en colonnes, les pixels (11) comprenant chacun :
un élément détecteur photosensible (15) pour générer une charge électrique à partir d'une lumière incidente,
une grille de transfert (39),
un noeud de lecture (41) qui est couplé en charge à l'élément de détection (15) via la grille de transfert (39),
un circuit convertisseur (43) pour générer un signal de mesure proportionnel à une charge présente dans le noeud de lecture (41), et
un moyen de réinitialisation (45) pour réinitialiser une charge présente dans le noeud de lecture (41) à une valeur de référence ;
et comportant en outre un moyen de commande (53) pour commander la grille de transfert (39) et le moyen de réinitialisation (45) du pixel respectif (11) ;
dans lequel
le moyen de commande (53) est conçu de telle sorte que la charge générée au cours d'une opération d'exposition unique dans l'élément détecteur respectif (15) est transférée en plusieurs parties depuis l'élément détecteur (15) au noeud de lecture (41) du fait qu'au moins trois signaux de commande de transfert consécutifs sont appliqués à la grille de transfert (39), de manière à permettre un transfert de charge de l'élément détecteur au noeud de lecture (41) pour générer, pour chaque transfert de charge, un propre signal de mesure de valeur partielle à l'aide du circuit convertisseur (43), signal qui est proportionnel à la charge présente dans le noeud de lecture (41) en raison du transfert de charge respectif, lesdits au moins trois signaux de commande de transfert ayant des valeurs de commande de différentes importances ;
**caractérisé en ce que**
la valeur absolue de la valeur de commande de chaque signal tardif parmi lesdits au moins trois signaux de commande de transfert est supérieure à la valeur absolue du signal respectif précoce parmi lesdits au moins trois signaux de commande de transfert.

2. Capteur d'images selon la revendication 1,
**caractérisé en ce que**
le moyen de commande (53) est conçu de telle sorte que le moyen de réinitialisation (45) est activé entre les signaux de commande de transfert consécutifs respectifs.

3. Capteur d'images selon la revendication 1 ou 2,
**caractérisé en ce que**
les pixels (11) disposés dans une colonne respective sont connectés à un circuit amplificateur de colonne (13), commandé par le moyen de commande (53), via un conducteur de colonne (17) commun, ledit circuit comprenant au moins un amplificateur (19) et un certain nombre de mémoires de signaux de valeur partielle (21A, 21B, 21C) qui correspond au nombre des signaux de commande de transfert consécutifs, le moyen de commande (53) étant réalisé de telle sorte que chacun des signaux de mesure de valeur partielle correspondant au transfert de charge est transféré à une propre mémoire parmi les mémoires de signaux de valeur partielle (21A, 21B, 21C).

4. Capteur d'images selon la revendication 3,
**caractérisé en ce que**
les mémoires de signaux de valeur partielle (21A, 21B, 21C) présentent des capacités identiques et/ou sont réalisées de façon intégrée.

5. Capteur d'images selon la revendication 3 ou 4,
**caractérisé en ce que**
le circuit amplificateur de colonne (13) respectif comprend des premiers moyens commutateurs (23A, 23B, 23C), les mémoires de signaux de valeur partielle (21A, 21B, 21C) étant susceptibles d'être connectées simultanément à une première entrée (25) de l'amplificateur (19) via les premiers moyens commutateurs (23A, 23B, 23C).

6. Capteur d'images selon la revendication 5,
**caractérisé en ce que**
le moyen de commande (53) est réalisé de telle sorte qu'après une activation du moyen de réinitialisation (45) un signal de mesure de valeur de référence correspondant à la valeur de référence de la charge est généré par le circuit convertisseur (43) et transféré à une mémoire de signaux de valeur de référence (27) du circuit amplificateur de colonne respectif (13), la mémoire de signaux de valeur de référence (27) étant connectée ou susceptible d'être connectée à une seconde entrée (29) de l'amplificateur (19).

7. Capteur d'images selon l'une des revendications 3 à 6,
**caractérisé en ce que**
le circuit amplificateur de colonne respectif (13) comprend un amplificateur supplémentaire (31) et une mémoire de signaux de valeur résiduelle (33), le moyen de commande (53) étant réalisé de telle sorte que l'un des signaux de mesure de valeur partielle correspondant au transfert de charge est transféré simultanément à la mémoire de signaux de valeur partielle (21C) associée et à la mémoire de signaux de valeur résiduelle (33).

8. Capteur d'images selon la revendication 7,
**caractérisé en ce que**
le signal de mesure de valeur partielle est ce signal de mesure de valeur partielle qui correspond au dernier transfert de charge.

9. Capteur d'images selon la revendication 7 ou 8,
**caractérisé en ce que**
la mémoire de signaux de valeur résiduelle respectif (33) est connecté ou susceptible d'être connecté à une première entrée (35) de l'amplificateur supplémentaire (31).

10. Capteur d'images selon l'une des revendications 7 à 9,
**caractérisé en ce que**
une mémoire de signaux de valeur de référence (27) est connectée ou susceptible d'être connectée à une seconde entrée (37) de l'amplificateur supplémentaire (31).

11. Capteur d'images selon l'une des revendications 7 à 10,
**caractérisé en ce que**
l'amplificateur supplémentaire (31) possède un facteur d'amplification supérieur à celui dudit au moins un amplificateur (19).

12. Capteur d'images selon l'une des revendications 3 à 11,
**caractérisé en ce que**
le circuit amplificateur de colonne respectif (13) comprend des seconds moyens commutateurs (49A, 49B, 49C, 49D, 49E), le conducteur de colonne (17) étant susceptible d'être connecté au choix à une ou à plusieurs des mémoires de signaux (21A, 21B, 21C, 27, 33) via les seconds moyens commutateurs (49A, 49B, 49C, 49D, 49E).

13. Capteur d'images selon la revendication 2,
**caractérisé en ce que**
le capteur d'images est réalisé de telle sorte que les signaux de mesure de valeur partielle correspondant au transfert de charge d'une opération d'exposition unique sont numérisés individuellement et les signaux de mesure de valeur partielle numérisés sont ensuite composés en un signal de mesure de valeur totale numérique.

14. Procédé de lecture d'un capteur d'images, en particulier d'un capteur d'images CMOS, pour des caméras électroniques, le capteur d'images comportant une multitude de pixels (11) disposés en lignes et en colonnes, dans lequel
une charge électrique générée à partir d'une lumière incidente au moyen d'un élément détecteur photosensible (15) est transférée à un noeud de lecture (41) qui est couplé en charge à l'élément détecteur (15) via une grille de transfert (39),
un signal de mesure est généré au moyen d'un circuit convertisseur (43), qui est proportionnel à une charge présente dans le noeud de lecture (41), et
une charge présente dans le noeud de lecture (41) est réinitialisée à une valeur de référence à l'aide d'un moyen de réinitialisation (45),
la charge générée au cours d'une opération d'exposition unique dans l'élément détecteur respectif (15) est transférée en plusieurs parties depuis l'élément détecteur (15) au noeud de lecture (41) du fait qu'au moins trois signaux de commande de transfert consécutifs sont appliqués à la grille de transfert (39), de manière à permettre un transfert de charge respectif depuis l'élément détecteur (15) au noeud de lecture (41) pour générer, pour chaque transfert de charge, un propre signal de mesure de valeur partielle à l'aide du circuit convertisseur (43), signal qui est proportionnel à la charge présente dans le noeud de lecture (41) en raison du transfert de charge respectif, lesdits au moins trois signaux de commande de transfert ayant des valeurs de commande de différentes importances ;
**caractérisé en ce que**
la valeur absolue de la valeur de commande de chaque signal tardif parmi lesdits au moins trois signaux de commande de transfert est supérieure à la valeur absolue du signal respectif précoce parmi lesdits au moins trois signaux de commande de transfert.
